# EUROPEAN PATENT SPECIFICATION

(11) **EP 3 415 355 B1**
(45) Date of publication and mention of the grant of the patent: **06.05.2020**
(21) Application number: 17175804.8
(22) Date of filing: 13.06.2017
(51) Int. Cl.: B60K 15/07, B60K 15/03, B60K 15/063

(54) **A SYSTEM FOR SUPPORTING AND PROTECTING A GAS TANK OF A GAS FUEL SYSTEM ON-BOARD OF A MOTOR-VEHICLE**
SYSTEM ZUR UNTERSTÜTZUNG VON UND SCHUTZ EINES GASTANKS EINES BRENNGASSYSTEMS AN BORD EINES KRAFTFAHRZEUGES
SYSTÈME POUR SUPPORTER ET PROTÉGER LE RÉSERVOIR D'UN SYSTÈME DE CARBURANT GAZEUX À BORD D'UN VÉHICULE À MOTEUR

(43) Date of publication of application: 19.12.2018
(73) Proprietor: FCA Italy S.p.A., 10135 Torino (IT)
(72) Inventor: FAVALORO, Sebastian, 10135 Torino (IT); BUSCAGLIA, Francesco, 10135 Torino (IT); DEL NERO, Gianfranco, 10135 Torino (IT); MONFRINO, Giovanni, 10043 Orbassano (Torino) (IT)
(74) Representative: Notaro, Giancarlo

(56) References cited:
- EP-A1- 1 380 461
- EP-A1- 2 915 687
- DE-A1-102013 006 460
- US-A1- 2006 033 322
- US-A1- 2014 097 641
- US-A1- 2014 117 716
- US-A1- 2015 096 977

## Description

### Field of the invention

The present invention relates to gas fuel systems on-board of a motor-vehicle. Specifically, the present invention is directed at a system having the features indicated in the preamble of Claim 1.

### Prior art

Motor-vehicles with gas fuel system are now very widespread, since the economic savings obtainable are very relevant, for the same distance, compared to motor-vehicles with traditional gasoline systems. One of the disadvantages of gas fuel systems, compared to traditional gasoline systems, is undoubtedly that of the bulk and weight of the gas tanks containing the gas fuel. It is therefore necessary to set up systems configured to support the weight of the gas tanks and also configured to protect the gas tanks from undesirable damages. The documents DE 1020 13 00 64 60 A1 and US 2006 00 33 32 2 A1 disclose two systems having the features indicated at the beginning of the present description.

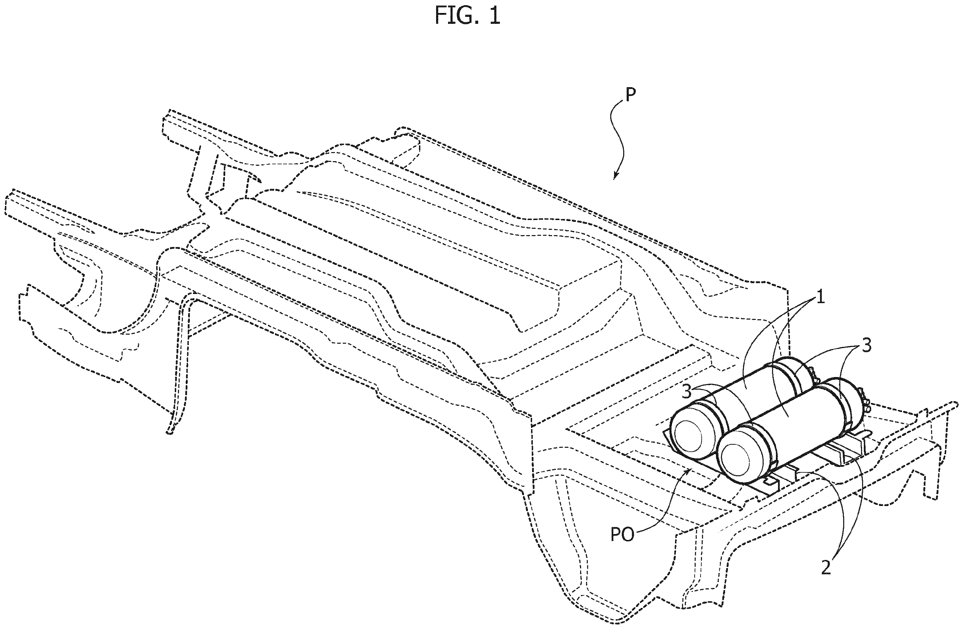

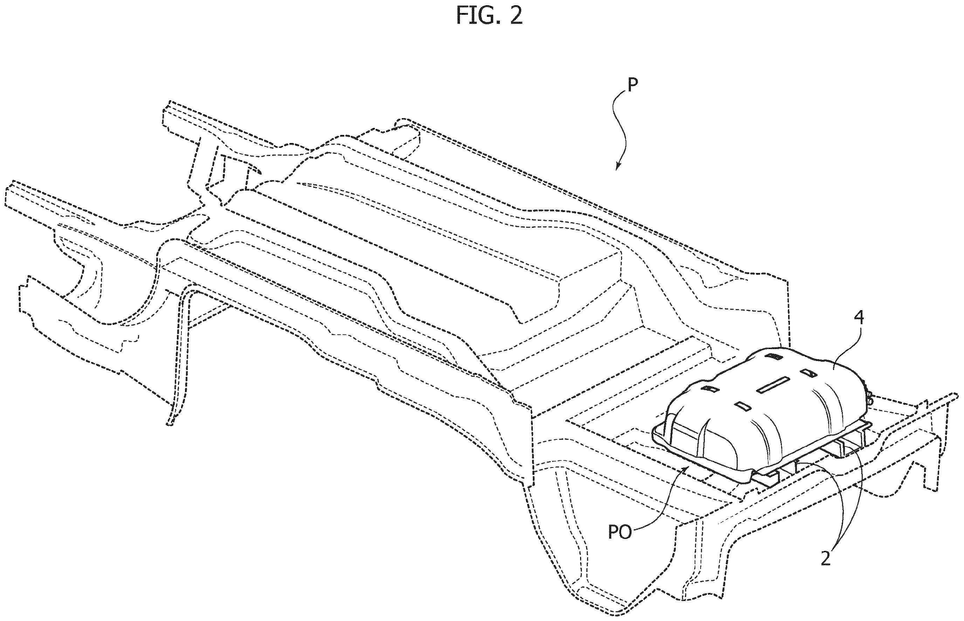

Figures 1 and 2 of the attached drawings show another system for supporting and protecting one or more gas tanks of a gas fuel system of a motor-vehicle, produced according to the prior art.

More particularly, Figures 1, 2 each illustrate a schematic perspective view of a motor-vehicle floor P which is associated with a known system for supporting and protecting a pair of gas tanks 1 of a gas fuel system. With reference to the drawings, the lower surface of the floor P intended to face the ground is facing upwards.

With reference to Figure 1, the pair of gas tanks 1 containing gas fuel is associated with a rear section P0 of the floor P of the motor-vehicle equipped with a gas fuel system. The gas tanks 1 are protruding below the portion P0 of the floor P.

The known type of system for supporting and protecting gas tanks 1 is formed of several elements, in which some of them are provided solely to achieve the function of supporting the weight of the gas tanks, and others are provided solely to achieve the function of protecting the gas tanks from interference with foreign bodies.

More specifically and still with reference to Figure 1, each gas tank 1 is supported at the rear portion P0 of the floor P by means of a pair of bands 3 that wrap around the outer body of the tank 1. Each pair of bands 3 is secured to a bracket 2 rigidly connected to the portion P0 of the floor P. The bands 3 and the brackets 2 are, therefore, provided to support the gas tanks 1 below the portion P0 of the floor P.

Figure 2 illustrates, in addition to the same elements as in the previous figure, a covering element 4 provided solely to protect the outer body of the gas tanks 1. The covering element 4 is rigidly connected to the brackets 2 and has a cup-like shape so as to completely cover the outer body of the gas tanks 1. Thanks to the above-described conformation of the covering element 4, it is able to protect the gas tanks 1 protruding below the motor-vehicle floor P from interference with foreign bodies.

The present invention stems from the desire to produce a system for supporting and protecting one or more gas tanks of a gas fuel system on-board of a motor-vehicle, which is simpler and cheaper to produce compared to the known systems.

### Object of the invention

The object of the present invention is therefore to produce a system for supporting and protecting at least one gas tank of a gas fuel system on-board of a motor-vehicle that is constructively simple, economic to produce, easy to assembly on-board a motor-vehicle, but which, at the same time, is able to fully satisfy the two main functions described above for supporting and protecting the gas tanks of the vehicle.

### Summary of the invention

In view of achieving the aforesaid objects, the present invention relates to a system for supporting and protecting at least one gas tank of a gas fuel system on-board of a motor-vehicle, having the characteristics indicated in Claim 1.

Thanks to the characteristics indicated above, the system according to the present invention allows the functions of supporting and protecting the gas tanks of the gas fuel system to be achieved, with a simple and economic solution.

Furthermore, the present invention is also directed at a motor-vehicle comprising a gas fuel system with at least one gas tank containing gas fuel, and a system having the characteristics previously indicated, with the purpose of supporting and protecting the gas tank.

### Detailed description

Further characteristics and advantages of the invention will become apparent from the description that follows with reference to the attached drawings, provided purely by way of non-limiting example, wherein:
- Figures 1 and 2 are schematic perspective views of a system for supporting and protecting a gas tank of a gas fuel system on-board of a motor-vehicle, produced according to the prior art,
- Figure 3 is a schematic perspective view of a system for supporting and protecting at least one gas tank of a gas fuel system on-board of a motor-vehicle, according to a preferred embodiment of the present invention,
- Figure 4 is a view on an enlarged scale of some parts illustrated in Figure 3,
- Figures 5 and 6 are perspective views of various elements illustrated in Figures 3 and 4, and
- Figure 7 illustrates an additional perspective view of the system according to the present invention associated with a petrol tank.

With reference to Figures 1 and 2, a known type of system for supporting and protecting one or more gas tanks of a gas fuel system on-board of a motor-vehicle has already been described above.

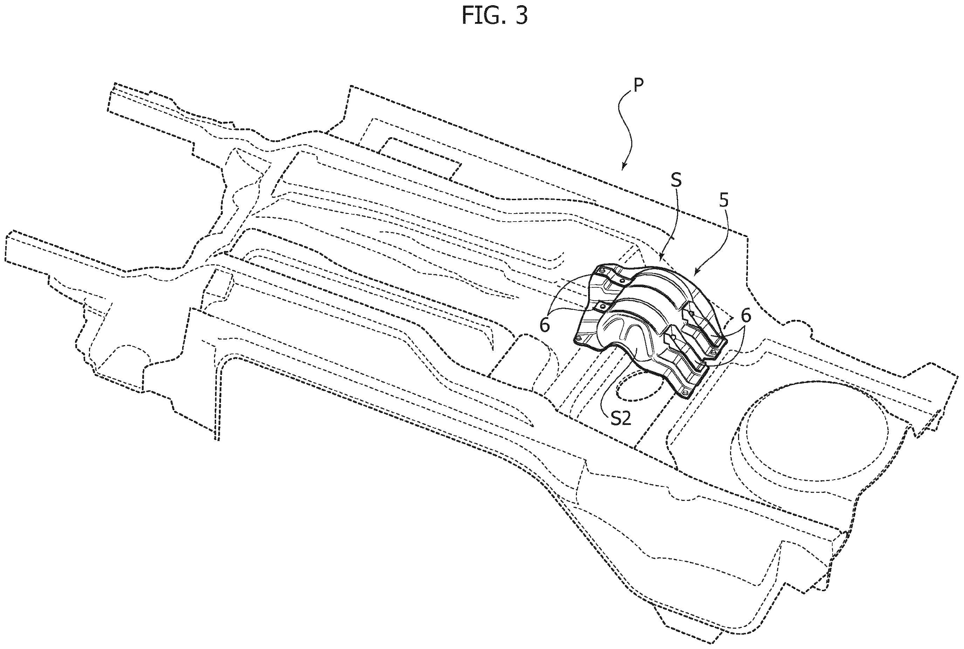

An preferred embodiment is illustrated in Figures 3-7 of a system S according to the invention, for supporting and protecting at least one gas tank of a gas fuel system on-board of a motor-vehicle. In these figures, only one gas tank is illustrated, but the system according to the present invention can also be applied to the case of two or more gas tanks. In the figures illustrating the system according to the invention, parts in common or corresponding to those illustrated in Figures 1, 2 are indicated with the same references

As in the known systems, in the system S according to the present invention, the gas tank 1 is arranged to protrude below the motor-vehicle floor P, and a covering element 5 is arranged to protect the gas tank 1. In the system S according to the present invention, the covering element 5 is in direct or indirect contact with the gas tank 1, and the gas tank 1 is supported by the floor P of the motor-vehicle by means of the covering element 5, without the aid of additional elements for supporting the tank 1. As a result, the covering element 5 is designed to fulfil both the function of protecting the gas tank from interference with foreign bodies that can lead to damage to the tanks (for example, hitting by stones or interference with obstacles on the ground) as well as the function of supporting the gas tank at the motor-vehicle floor P.

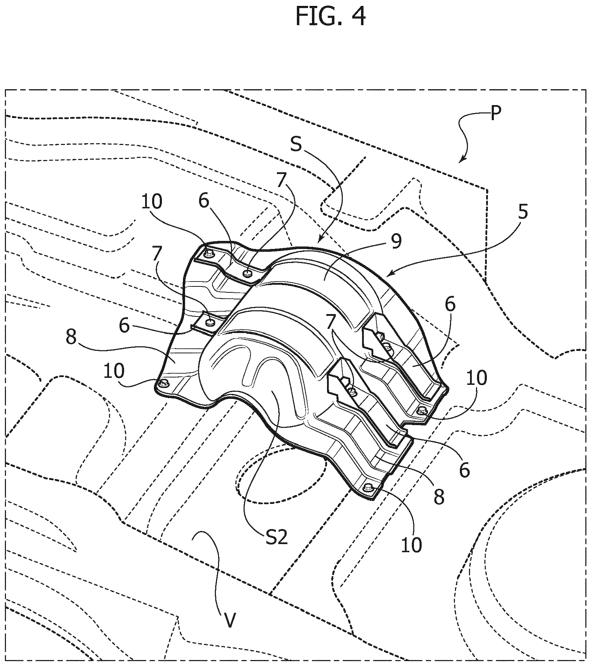

The covering element 5 presents a cup-shaped central portion 9 to cover the outer body of the gas tank 1 and a perimeter flange 8. In the mounted condition, on the motor-vehicle floor P, the covering element 5 has an upper surface S1 facing the gas tank 1 and a lower surface S2 facing the ground. As illustrated in Figure 4, the covering element 5 is connected below the floor P by means of a plurality of fastening elements 10 arranged along the perimeter flange 8. The fastening elements 10 can have threaded connections (as shown) or rivets or welding points.

According to an important characteristic of the invention illustrated in the drawings, the covering element 5 has a plurality of reinforcement brackets 6, which are rigidly connected to its central portion 9 at its lower surface S2 (Figure 4). The brackets 6 are connected to the lower surface S2 of the covering element 5 by means of a plurality of fastening elements 7. In this case as well, the fastening elements 7 can be bolts, rivets or welding points. To attach the brackets 6 to the covering element 5, the fastening elements 10 used for supporting the covering element 5 at the floor P are used, at least in part. The reinforcing brackets 6 are arranged to give greater rigidity to the covering element 5 at the points of maximum stress due to the weight of the gas tanks 1.

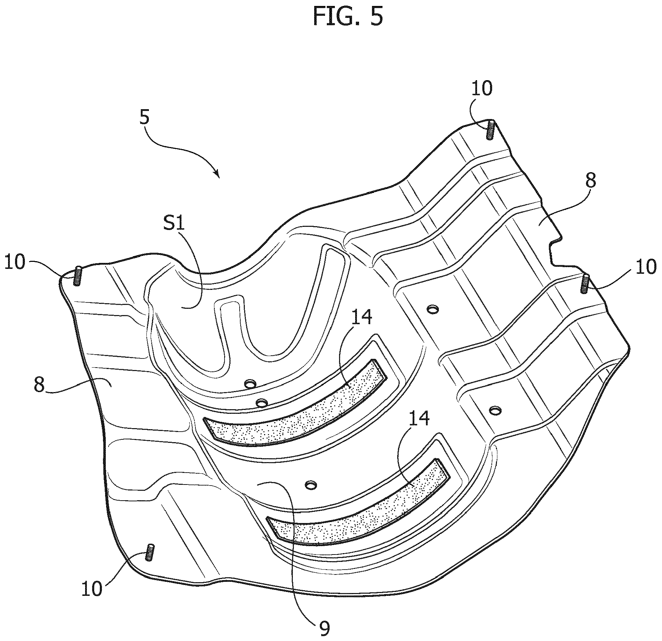

Figure 5 of the attached drawings illustrates a perspective view of the covering element 5 and, in particular, its upper surface S1. A pair of bands of polymeric elastomeric material 14 is provided on the upper surface S1 at the central portion 9 of the covering element 5. The bands of polymeric elastomeric material 14 are arranged in such a way that the contact between the gas tank 1 and the covering element 5 is created through these band elements of polymeric elastic material. The contact between the gas tank 1 and the covering element 5 is, therefore, indirect because the bands 14 are interposed between the gas tanks and the upper surface of the covering element. Thanks to this characteristic, any type of anomaly resulting from the contact between the outer surface of the gas tank 1 and the surface S1 of the covering element 5 is thus avoided.

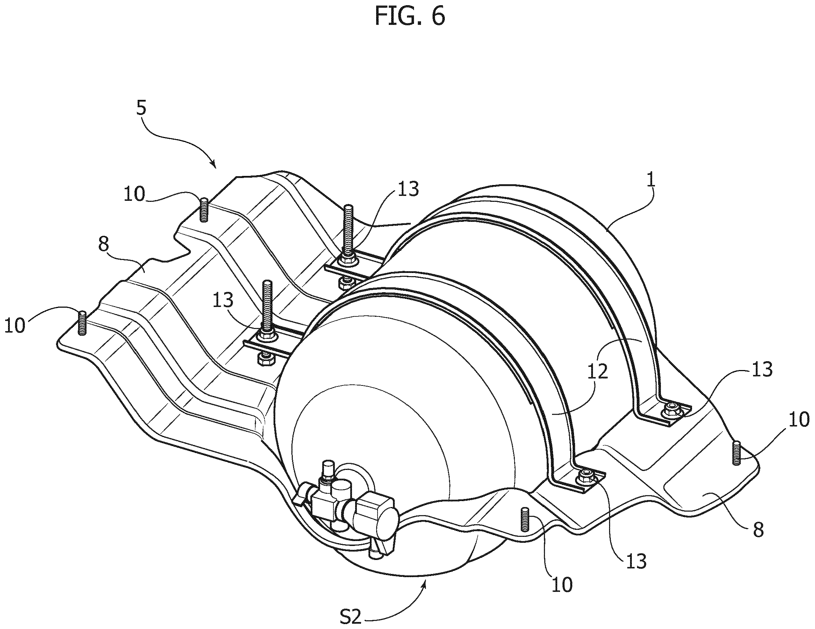

According to a further characteristic of the invention, the system also comprises at least one locking band 12 designed to partially wrap around the gas tank 1. In the illustrated example of Figure 6, there are two locking bands 12, which are rigidly connected to the upper surface S1 of the covering element 5 at its end portions adjacent to the perimeter flange 8. The locking bands 12 are locked by means of a plurality of fastening elements 13. Thanks to this characteristic, the locking bands 12 secure the gas tank 1 within the covering element 5 so as to avoid any movement of the gas tank 1 caused by the movement of the motor-vehicle on the road.

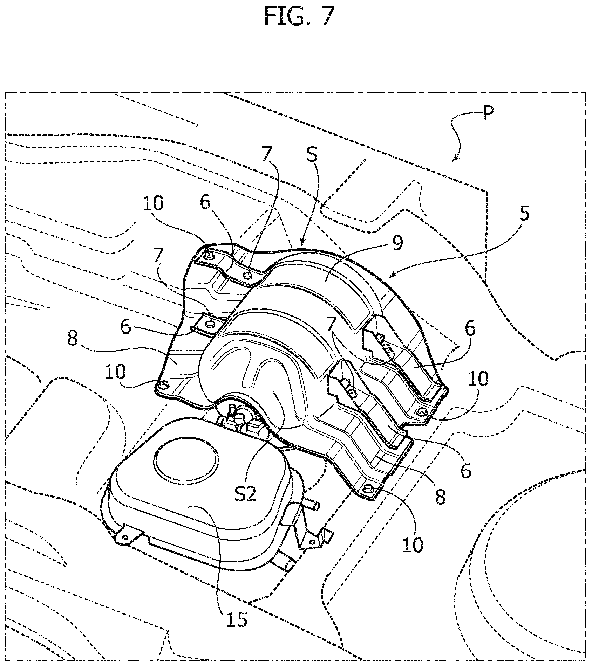

The present invention is also aimed at a motor-vehicle that comprises a gas fuel system with at least one gas tank 1 containing the gas fuel, and a system S according to the present invention for supporting and protecting the gas tank 1 at the floor P. One example of application of the system S to a motor-vehicle floor P is shown in Figure 7. In this figure, the floor P comprises a portion with a compartment V configured to alternatively receive a conventional petrol tank or a petrol tank 15 with reduced dimensions and a gas tank with which the S system is associated for supporting and protecting the gas tank according to the present invention (as illustrated in Figure 7). By providing the compartment V, the motor-vehicle manufacturer can use the same type of floor P to produce either a motor-vehicle with a conventional petrol system or a motor-vehicle with a dual-fuel system (bifuel gas and petrol).

Thanks to the characteristics described above, the system according to the present invention efficiently performs both the support function of the gas tank on the motor-vehicle floor and the protection function of the gas tank, by means of a constructively simple, economical and easy-to-implement solution.

Of course, without prejudice to the principle of the invention, the details of construction and the embodiments may vary widely with respect to those described and illustrated purely by way of example, without departing from the scope of the present invention, as defined in the claims.

## Claims

1. A system (S) for supporting and protecting at least one gas tank (1) of a gas fuel system on-board of a motor-vehicle, wherein said gas tank (1) is arranged to protrude below a floor (P) of a motor-vehicle and said system (S) is adapted to be associated with a floor (P) of a motor-vehicle at a gas tank (1),
said system (S) comprising a covering element (4, 5) rigidly connectable below the floor (P) of the motor-vehicle, wherein said covering element (4, 5) is cup-shaped to cover the outer body of said gas tank (1) and, when said system (S) is associated with the floor (P) of the motor-vehicle at a gas tank (1), has an upper surface (S1) facing said gas tank (1) and a lower surface (S2) facing the ground, so that said covering element (4, 5) protects said gas tank (1) protruding below the floor (P) of the motor-vehicle from interference with foreign bodies,
when said system (S) is associated with the floor (P) of the motor-vehicle at a gas tank (1), said covering element (5) is in direct or indirect contact with said gas tank (1), and said gas tank (1) is supported by the floor (P) of the motor-vehicle by means of said covering element (5), without the aid of additional elements to support said gas tank (1),
said covering element (5) is adapted to be connected below the floor (P) of the motor-vehicle by means of a plurality of fastening elements (10) arranged along a perimeter flange (8) of said covering element (4,5),
said system (S) also comprises at least one locking band (12) intended for partially wrapping around a gas tank (1), wherein said locking band (12) is rigidly connected to the upper surface (S1) of said covering element (5) at its end portions in such a way that, when said system (S) is associated with the floor (P) of a motor-vehicle at a gas tank (1), said locking band (12) secures the gas tank (1) within the covering element (5) so as to avoid movements of the gas tank (1) caused by the movement of the motor-vehicle,
said system (S) being **characterized in that**:
said covering element (5) has a plurality of reinforcing brackets (6), which are arranged to give greater rigidity to the covering element (5) at points of maximum stress due to the weight of the gas tank (1), said brackets (6) being rigidly connected to a central portion (9) of the covering element (5) at its lower surface (S2) by further fastening elements (7),
said fastening elements (10) arranged along the perimeter flange (8) of said covering element (4,5), being also used, at least in part, to attach said brackets (6) to the covering element (5), and
said covering element (5) has at least one band element of polymeric elastic material (14) at its central portion (9) arranged on the upper surface (S1) of said covering element (5), in such a way that, when said system (S) is associated with the floor (P) of the motor-vehicle at a gas tank (1), the contact between said gas tank (1) and said covering element (5) is achieved by means of said band element of polymeric elastic material (14).

2. A motor-vehicle comprising a floor (P) and a gas fuel system with at least one gas tank (1) containing said gas fuel, wherein said gas tank protrudes below the floor (P) of the motor-vehicle, said motor-vehicle being **characterized in that** it also comprises a system (S) according to any of the preceding claims for supporting and protecting said gas tank (1).

3. A motor-vehicle according to claim 2, **characterized in that** said floor (P) comprises a portion with a compartment (V) arranged to receive a petrol tank (15) side-by-side to said gas tank (1) with associated said system (S) for supporting and protecting said gas tank (1).

## Patentansprüche

1. System (S) zum Tragen und Schützen wenigstens eines Gastanks (1) eines Gas-Kraftstoffsystems an Bord eines Kraftfahrzeugs, wobei der Gastank (1) so angeordnet ist, dass er von einem Boden (P) eines Kraftfahrzeugs nach unten vorsteht, und das System (S) so eingerichtet ist, dass es mit einem Boden (P) eines Kraftfahrzeugs an einem Gastank (1) verbunden ist,
das System (S) ein Abdeckelement (4, 5) umfasst, das unter dem Boden (P) des Kraftfahrzeugs starr angebracht werden kann, wobei das Abdeckelement (4, 5) schalenförmig ist und den Außenkörper des Gastanks (1) abdeckt, und, wenn das System (S) mit dem Boden (P) des Kraftfahrzeugs an einem Gastank (1) verbunden ist, eine obere Fläche (S1), die dem Gastank (1) zugewandt ist, und eine untere Fläche (S2) hat, die dem Boden zugewandt ist, so dass das Abdeckelement (4, 5) den Gastank (1), der von dem Boden (P) des Kraftfahrzeugs nach unten vorsteht, vor Zusammentreffen mit Fremdkörpern schützt,
wenn das System (S) mit dem Boden (P) des Kraftfahrzeugs an einem Gastank (1) verbunden ist, das Abdeckelement (5) in direktem oder indirektem Kontakt mit dem Gastank (1) ist und der Gastank (1) mittels des Abdeckelementes (5) von dem Boden (P) des Kraftfahrzeugs ohne die Hilfe zusätzlicher Elemente zum Tragen des Gastanks (1) getragen wird,
das Abdeckelement (5) so eingerichtet ist, dass es mittels einer Vielzahl von Befestigungselementen (10), die entlang eines Umfangsflansches (8) des Abdeckelementes (4, 5) angeordnet sind, unter dem Boden (P) des Kraftfahrzeugs angebracht wird,
das System (S) des Weiteren wenigstens einen Fixierbügel (12) umfasst, der dazu dient einen Gastank (1) wenigstens teilweise zu umschließen, wobei der Fixierbügel (12) an seinen Endabschnitten starr so mit der oberen Fläche (S1) des Abdeckelementes (5) verbunden ist, dass wenn das System (S) mit dem Boden (P) eines Kraftfahrzeugs an einem Gastank (1) verbunden ist, der Fixierbügel (12) den Gastank (1) innerhalb des Abdeckelementes (5) so befestigt, dass durch die Bewegung des Kraftfahrzeugs verursachte Bewegungen des Gastanks (1) vermieden werden,
wobei das System (S) **dadurch gekennzeichnet ist, dass**:
das Abdeckelement (5) eine Vielzahl verstärkender Schellen (6) aufweist, die so angeordnet sind, dass sie dem Abdeckelement (5) an Punkten maximaler Belastung aufgrund des Gewichtes des Gastanks (1) größere Steifigkeit verleihen, wobei die Schellen (6) über weitere Befestigungselemente (7) mit einem mittigen Abschnitt (9) des Abdeckelementes (5) an dessen unterer Fläche (S2) starr verbunden sind,
die Befestigungselemente (10), die entlang des Umfangsflansches (8) des Ab-deckelementes (4, 5) angeordnet sind, wenigstens teilweise auch dazu dienen, die Schellen (6) an dem Abdeckelement (5) anzubringen, und
das Abdeckelement (5) wenigstens ein Streifenelement aus polymerem elastischen Material (14) in seinem mittigen Abschnitt (9) aufweist, das an der oberen Fläche (S1) des Abdeckelementes (5) so angeordnet ist, dass, wenn das System (S) mit dem Boden (P) des Kraftfahrzeugs an einem Gastank (1) verbunden ist, der Kontakt zwischen dem Gastank (1) und dem Abdeckelement (5) mittels des Streifenelementes aus polymerem elastischen Material (14) hergestellt wird.

2. Kraftfahrzeug, das einen Boden (P) und ein Gas-Kraftstoffsystem mit wenigstens einem den Gas-Kraftstoff enthaltenden Gastank (1) umfasst, wobei der Gastank von dem Boden (P) des Kraftfahrzeugs nach unten vorsteht, und das Kraftfahrzeug **dadurch gekennzeichnet ist, dass** es des Weiteren ein System (S) nach einem der vorangehenden Ansprüche zum Tragen und Schützen des Gastanks (1) umfasst.

3. Kraftfahrzeug nach Anspruch 2, **dadurch gekennzeichnet, dass** der Boden (P) einen Abschnitt mit einer Kammer (V) umfasst, die so eingerichtet ist, dass sie einen Benzintank (15) neben dem Gastank (1) mit dem zugehörigen System (S) zum Tragen und Schützen des Gastanks (1) aufnimmt.

## Revendications

1. Système (S) de support et de protection d'au moins un réservoir de gaz (1) d'un système de carburant gazeux à bord d'un véhicule automobile, dans lequel ledit réservoir de gaz (1) est agencé pour faire saillie sous un plancher (P) d'un véhicule automobile et ledit système (S) est adapté pour être associé à un plancher (P) d'un véhicule automobile au niveau d'un réservoir de gaz (1),
ledit système (S) comprenant un élément de recouvrement (4, 5) pouvant être relié de manière rigide sous le plancher (P) du véhicule automobile, dans lequel ledit élément de recouvrement (4, 5) est en forme de coupelle pour couvrir le corps extérieur dudit réservoir de gaz (1) et, lorsque ledit système (S) est associé au plancher (P) du véhicule automobile au niveau d'un réservoir de gaz (1), présente une surface supérieure (S1) faisant face audit réservoir de gaz (1) et une surface inférieure (S2) faisant face au sol, de sorte que ledit élément de recouvrement (4, 5) protège ledit réservoir de gaz (1) faisant saillie sous le plancher (P) du véhicule automobile contre les interférences avec des corps étrangers,
lorsque ledit système (S) est associé au plancher (P) du véhicule automobile au niveau d'un réservoir de gaz (1), ledit élément de recouvrement (5) est en contact direct ou indirect avec ledit réservoir de gaz (1), et ledit réservoir de gaz (1) est supporté par le plancher (P) du véhicule automobile au moyen dudit élément de recouvrement (5), sans l'aide d'éléments supplémentaires pour supporter ledit réservoir de gaz (1),
ledit élément de recouvrement (5) est adapté pour être relié sous le plancher (P) du véhicule automobile au moyen d'une pluralité d'éléments de fixation (10) agencés le long d'une bride périmétrique (8) dudit élément de recouvrement (4, 5),
ledit système (S) comprend également au moins une bande de verrouillage (12) destinée à s'enrouler partiellement autour d'un réservoir de gaz (1), où ladite bande de verrouillage (12) est reliée de manière rigide à la surface supérieure (S1) dudit élément de recouvrement (5) au niveau de ses parties d'extrémité de sorte que, lorsque ledit système (S) est associé au plancher (P) d'un véhicule automobile au niveau d'un réservoir de gaz (1), ladite bande de verrouillage (12) fixe le réservoir de gaz (1) à l'intérieur de l'élément de recouvrement (5) de manière à éviter les mouvements du réservoir de gaz (1) provoqués par le mouvement du véhicule automobile,
ledit système (S) étant **caractérisé en ce que** :
ledit élément de recouvrement (5) a une pluralité de supports de renforcement (6) qui sont agencés pour donner une plus grande rigidité à l'élément de recouvrement (5) aux points de contrainte maximale en raison du poids du réservoir de gaz (1), lesdits supports (6) étant reliés de manière rigide à une partie centrale (9) de l'élément de recouvrement (5) au niveau de sa surface inférieure (S2) par des éléments de fixation supplémentaires (7),
lesdits éléments de fixation (10) agencés le long de la bride périmétrique (8) dudit élément de recouvrement (4, 5), étant également utilisés, au moins en partie, pour attacher lesdits supports (6) à l'élément de recouvrement (5), et
ledit élément de recouvrement (5) a au moins un élément de bande en matériau élastique polymère (14) au niveau de sa partie centrale (9) agencé sur la surface supérieure (S1) dudit élément de recouvrement (5), de sorte que, lorsque ledit système (S) est associé au plancher (P) du véhicule automobile au niveau d'un réservoir de gaz (1), le contact entre ledit réservoir de gaz (1) et ledit élément de recouvrement (5) soit obtenu au moyen dudit élément de bande en matériau élastique polymère (14).

2. Véhicule automobile comprenant un plancher (P) et un système de carburant gazeux avec au moins un réservoir de gaz (1) contenant ledit carburant gazeux, dans lequel ledit réservoir de gaz fait saillie sous le plancher (P) du véhicule automobile, ledit véhicule automobile étant **caractérisé en ce qu'**il comprend également un système (S) selon l'une des revendications précédentes pour supporter et protéger ledit réservoir de gaz (1).

3. Véhicule automobile selon la revendication 2, **caractérisé en ce que** ledit plancher (P) comprend une partie avec un compartiment (V) agencé pour recevoir un réservoir d'essence (15) côte à côte dudit réservoir de gaz (1) avec ledit système (S) associé pour supporter et protéger ledit réservoir de gaz (1).
